# FASCICULE DE BREVET EUROPEEN

(11) **EP 3 671 498 B1**
(45) Date de publication et mention de la délivrance du brevet: **09.08.2023**
(21) Numéro de dépôt: 18214411.3
(22) Date de dépôt: 20.12.2018
(51) Int. Cl.: H04L 9/40, G06F 21/30, H04L 9/32, H04W 12/06

(54) **PROCEDE D'AUTHENTIFICATION SECURISEE D'UN TRANSPONDEUR EN COMMUNICATION AVEC UN SERVEUR**
GESICHERTES AUTHENTIFIZIERUNGSVERFAHREN EINES TRANSPONDERS, DER MIT EINEM SERVER KOMMUNIZIERT
METHOD FOR SECURE AUTHENTICATION OF A TRANSPONDER COMMUNICATING WITH A SERVER

(43) Date de publication de la demande: 24.06.2020
(73) Titulaire: EM Microelectronic-Marin SA, 2074 Marin (CH)
(72) Inventeur: SALGADO, Stéphanie, 2520 La Neuveville (CH); GUILLOUX, Julian, 2013 Colombier (CH)
(74) Mandataire: ICB SA

(56) Documents cités:
- US-A1- 2009 185 687
- US-A1- 2009 235 339
- US-A1- 2015 189 505
- US-B1- 9 292 668

## Description

### DOMAINE TECHNIQUE

La présente invention concerne un procédé d'authentification sécurisée d'un transpondeur en communication avec un serveur pour contrôler l'authenticité d'un produit ou d'un objet, voire pour autoriser l'accès à un site déterminé.

La présente invention concerne aussi un transpondeur convenant à la mise en oeuvre du procédé d'authentification sécurisée.

### ARRIERE-PLAN TECHNOLOGIQUE

US 2015/189505 divulgue un dispositif d'authentification qui génère un mot de passe à usage unique (OTP) et le transmet à un serveur via un smartphone. US 9 292 668 divulgue un serveur d'authentification qui nécessite un mot de passe à usage unique (OTP) valide généré par un dispositif et transmis via un dispositif informatique avant d'accorder l'accès. US 2009/235339 divulgue un jeton d'authentification qui génère un mot de passe à usage unique (OTP) et l'envoie à un serveur pour authentification via l'ordinateur de l'utilisateur. US 2009/185687 divulgue les mots de passe à usage unique (OTP) qui sont générés à l'aide d'un horodatage ou en incrémentant ou décrémentant un compteur. Avec le déploiement d'Internet des objets IdO (IoT en terminologie anglaise), il y a de plus en plus d'objets ou produits, qui sont équipés avec des transpondeurs de tout type de communication. Ces transpondeurs peuvent être par exemple du type à communication en champ proche NFC, voire aussi en UHF. De tels transpondeurs sont par exemple enfermés ou encapsulés dans des habits de sport, un équipement personnel ou tout autre produit ou objet. L'utilisateur peut taper ou sélectionner le produit désiré pour avoir accès à des offres spéciales, telles que vidéo sur le réseau internet (web), rabais ou autre.

Pour déterminer l'authenticité d'un produit, il est connu d'utiliser par exemple un dispositif de lecture, tel qu'un téléphone portable d'un client configuré pour un tel contrôle. Le téléphone portable peut être configuré pour contrôler par une communication en champ proche l'authenticité du produit portant le transpondeur. En fonction d'un signal au format d'échange de données traditionnel NDEF, le téléphone portable peut être capable de déterminer si le produit est authentique ou s'il s'agit d'un faux produit selon une liste de produits connus par exemple et éventuellement stockée dans le téléphone portable. Cependant avec uniquement cette communication à courte distance, aucun accès à un serveur dédicacé n'est effectué pour permettre d'authentifier de manière plus sûre un produit ou un objet, voire pour autoriser l'accès à un site déterminé, ce qui constitue un inconvénient.

Généralement pour l'accès par exemple à un site d'un fournisseur de services ou de produits, le transpondeur, qui est placé sur ledit produit et qui est personnalisé au dit produit, doit être reconnu par le serveur lors d'une communication. Une manière standard de reconnaître ledit transpondeur en communication est par exemple effectuée au moyen d'un protocole défi-réponse ("challenge-response" en terminologie anglaise) en utilisant par exemple une technique de cryptage et décryptage symétrique (AES). Un téléphone portable est placé à proximité du produit portant le transpondeur personnalisé, et un signal d'interrogation à nombre aléatoire R est transmis du téléphone vers le transpondeur. Le transpondeur génère un jeton d'identification "Token" selon un algorithme de cryptage au moyen du nombre aléatoire R reçu et d'une clé secrète K pour donner le jeton Token = Algo(R, K). Une transmission du signal crypté est effectuée en direction d'un serveur dédicacé à travers le téléphone de manière à permettre au serveur de calculer sur la base du nombre aléatoire R et de la même clé secrète K un jeton de contrôle TokenExp = Algo(R, K). Une comparaison entre le jeton transmis Token = Algo(R, K) depuis le transpondeur et celui calculé TokenExp = Algo(R, K) dans le serveur est effectuée pour savoir si le transpondeur est authentique ou faux. Si le transpondeur connaît la clé secrète, cela démontre qu'il est authentique.

Avec la technique de reconnaissance du transpondeur décrite cidessus, cela requiert une application particulière à installer pour transmettre la commande d'authentification à défi, ce qui peut compliquer la communication entre le transpondeur et le serveur. De plus, rien n'est garanti que tout dispositif de lecture et d'émission intermédiaire espion ne peut être utilisé notamment pour mémoriser le signal crypté lors de la transmission à destination du serveur, et retransmettre ce signal crypté lors d'une autre transmission vers le serveur dédicacé pour être reconnu par le serveur. Ainsi, cela constitue un inconvénient.

Dans le chapitre intitulé "Implementation of a Countermeasure to Relay Attacks for Contactless HF Systems" INTECH de 2013, de Pierre-Henri Thevenon et Olivier Savry, il est décrit la détection de relais intermédiaires. Un protocole bidirectionnel de communication est utilisé entre une carte de paiement à transpondeur et une unité de paiement par exemple. Cette détection est effectuée en mesurant le retard dans la réception et transmission de signaux qu'ils génèrent en utilisant une méthode de corrélation. Cependant, cela ne garantit pas toute mémorisation de données personnelles durant la transmission par un dispositif de lecture portable à proximité à réutiliser plus tard, ce qui constitue un inconvénient.

Comme décrit ci-devant, il est connu d'utiliser des protocoles cryptographiques d'interrogation-réponse pour authentifier un transpondeur avec son identifiant. Cependant cela requiert une communication bidirectionnelle, qui oblige habituellement un dispositif de lecture intermédiaire d'initier la communication avec un serveur. Actuellement, il est plus pratique d'initier la communication en alimentant le transpondeur avec un dispositif de lecture, tel qu'un téléphone portable à proximité par exemple. Cela implique que le lien est uniquement une liaison montante (up-link en terminologie anglaise). Cela signifie donc depuis le transpondeur vers le serveur uniquement.

Les protocoles en liaison montante peuvent être préférés, car d'une part un téléphone portable n'a pas besoin d'une application particulière pour être utilisé puisque les fonctions natives NFC sont employées, et d'autre part, la communication entre le transpondeur et le téléphone portable est simplifiée.

Dans cette situation, les protocoles d'interrogation-réponse ne sont pas appropriés. Au lieu de ça, il est préconisé d'utiliser un mécanisme basé sur la génération d'un mot de passe unique (OTP, one-time password en terminologie anglaise). Cela permet une authentification du transpondeur avec un protocole à passage unique (one-pass protocol en terminologie anglaise).

Un avantage d'un protocole OTP est que ce protocole fonctionne avec tous les types de téléphones portables NFC du marché. Certains téléphones ou systèmes d'exploitation ne supportent pas d'autres commandes NFC que le signal au format d'échange de données traditionnel NDEF. Il est donc impossible d'envoyer un défi au transpondeur.

Dans le protocole de communication à mot de passe unique OTP, le transpondeur et le serveur peuvent partager une même clé secrète K. Le mot de passe unique OTP comprend l'état d'un compteur interne CNT concaténé avec le résultat d'un algorithme de cryptage Algo(K, CNT | ID | | fix), où K est la clé secrète, ID est le numéro d'identification du transpondeur et fix est une constante. L'algorithme peut être un algorithme de cryptage symétrique (AES). Ce mot OTP transmis est un mot généré, qui ne peut être utilisé qu'une seule fois en cryptographie.

Normalement la transmission au serveur passe par un dispositif d'interrogation ou de lecture, qui peut être mobile comme un téléphone portable. Ce téléphone portable se place à proximité du transpondeur pour une connexion par exemple NFC pour servir d'intermédiaire (passerelle) avec le serveur distant.

Le serveur reçoit du téléphone portable en communication avec le transpondeur, le mot OTP. Le serveur va déterminer un autre mot de passe OTP_Exp avec la même clé secrète K sur la base de l'état d'un compteur CNT reçu du transpondeur, concaténé avec le résultat de l'algorithme de cryptage Algo(K, CNT| | ID| | fix). Bien entendu, le serveur contrôle tout d'abord que l'état du compteur CNT est plus grand qu'un précédent état de compteur CNT₋₁ reçu et mémorisé. Le compteur du transpondeur est généralement incrémenté d'une unité à chaque lecture. Ainsi, si le mot OTP_Exp est égal au mot OTP provenant du transpondeur, alors le transpondeur est considéré comme authentifié.

Une menace sur ce protocole à passage unique (one-pass protocol) peut survenir. Il peut être envisagé que dans une première phase, le mot de passe unique OTP, généré par le transpondeur en lecture et valable, soit lu par n'importe quel lecteur de transpondeur à proximité. Dans ces conditions, le mot OTP n'est pas envoyé au serveur dédicacé, mais est enregistré dans un fichier du lecteur. Plusieurs mots successifs OTP peuvent ainsi être enregistrés dans le lecteur pirate. Dans une seconde phase, les différents mots de passe unique OTP peuvent être mémorisés dans un transpondeur pirate, et une transmission de chaque mot OTP successif peut être effectuée par l'intermédiaire d'un lecteur valable pour parvenir au serveur dédicacé. Le serveur va constater que l'état du compteur CNT mémorisé dans chaque mot OTP répond au critère d'être plus grand que le précédent état du compteur reçu par le serveur. Dans ces conditions, le serveur va calculer l'autre mot de passe OTP_Exp et peut constater qu'il correspond au véritable mot OTP. Ainsi il est possible par cette technique pirate de faire passer un faux transpondeur pour un transpondeur valable, ce qui constitue un inconvénient.

### RESUME DE L'INVENTION

L'invention est définie par les revendications annexées. L'invention a donc pour but de pallier les inconvénients de l'état de la technique susmentionné en fournissant un procédé d'authentification sécurisée d'un transpondeur en communication avec un serveur pour contrôler l'authenticité d'un produit ou d'un objet, voire pour autoriser l'accès à un site déterminé. Ceci permet d'éviter toute attaque par répétition ou par de faux lecteurs et en garantissant une protection du consommateur en contrôlant ledit produit par l'intermédiaire du transpondeur qu'il porte.

A cet effet, l'invention concerne un procédé d'authentification sécurisée d'un transpondeur en communication avec un serveur pour contrôler l'authenticité d'un produit ou d'un objet, ou pour autoriser l'accès à un site déterminé, qui comprend les caractéristiques définies dans la revendication indépendante 1.

Des étapes particulières du procédé d'authentification sécurisée d'un transpondeur sont définies dans les revendications dépendantes 2 à 12.

Un avantage du procédé d'authentification sécurisée d'un transpondeur réside dans le fait qu'il est généré un mot de passe unique (OTP) à chaque lecture du transpondeur par un dispositif de lecture. Ce mot de passe unique est crypté par un algorithme dédié avec une clé secrète sur la base d'un état d'un compteur du transpondeur au moment d'une lecture et d'un retard de transmission déterminé dans le transpondeur par exemple de manière aléatoire à chaque lecture. Le mot de passe unique OTP est transmis à chaque lecture à un serveur dédicacé par l'intermédiaire d'un dispositif de lecture, qui a la charge de déterminer le retard de transmission à la réception du mot de passe unique OTP du transpondeur. Le dispositif de lecture transmet en plus du mot de passe unique OTP, le retard de transmission déterminé dans le dispositif de lecture au serveur. Finalement le serveur peut décrypter le mot de passe unique reçu avec un même algorithme à clé secrète de manière à comparer le retard de transmission décrypté du mot de passe unique et le retard de transmission déterminé dans le dispositif de lecture pour authentifier le transpondeur si les retards de transmission correspondent dans une marge temporelle déterminée. De plus, pour authentifier ledit transpondeur, le serveur contrôle que l'état du compteur décrypté est différent d'un précédent état du compteur mémorisé et de préférence supérieur au précédent état du compteur mémorisé.

Avantageusement, la valeur initiale du compteur avant la première utilisation ou lecture peut être déterminée aléatoirement non nulle et plus grande que 0.

Grâce au procédé d'authentification du transpondeur, on arrive à prévenir toute utilisation de lecteurs malicieux ou copies de mots de passe uniques dans un faux transpondeur.

A cet effet, l'invention concerne aussi un transpondeur convenant à la mise en oeuvre du procédé d'authentification sécurisée, qui comprend les caractéristiques définies dans la revendication indépendante 13.

### BREVE DESCRIPTION DES FIGURES

Les buts, avantages et caractéristiques du procédé d'authentification d'un transpondeur en communication avec un serveur apparaîtront mieux dans la description suivante sur la base d'au moins une forme d'exécution non limitative illustrée par les dessins sur lesquels :
- la figure 1 représente schématiquement les composants pour une communication entre un transpondeur monté sur un produit ou un objet et un serveur dédié pour l'authentifier selon l'invention, et
- la figure 2 représente les étapes d'un procédé d'authentification d'un transpondeur en communication avec un serveur selon l'invention.

### DESCRIPTION DETAILLEE DE L'INVENTION

Dans la description suivante, tous les composants utilisés pour le procédé d'authentification sécurisée d'un transpondeur en communication avec un serveur selon l'invention, qui sont bien connus de l'homme du métier dans ce domaine technique ne seront relatés que de manière simplifiée.

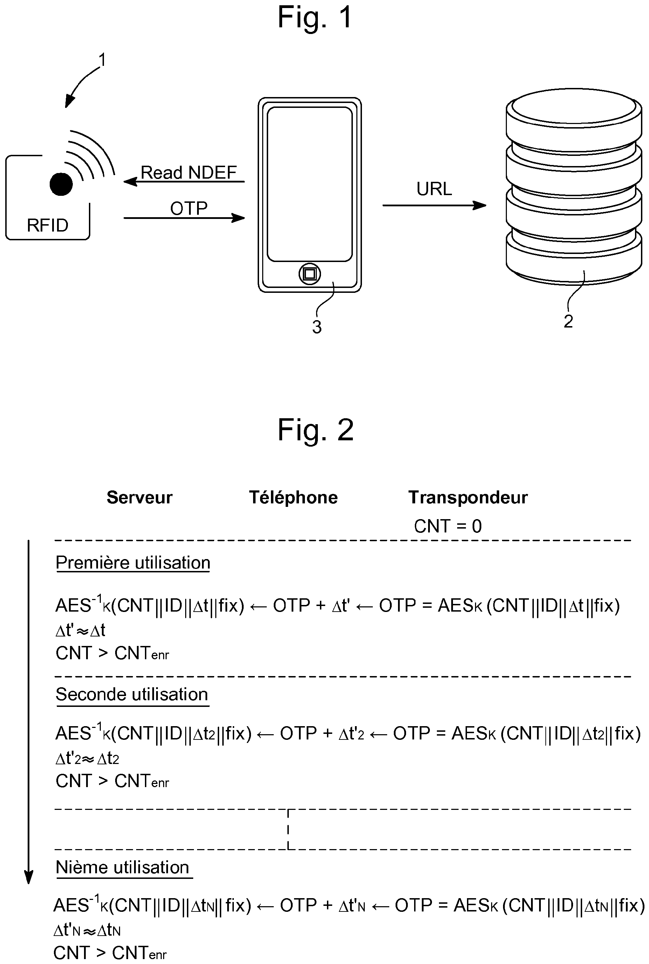

La figure 1 représente schématiquement les différents éléments d'un système d'authentification d'un transpondeur 1 pour une communication avec un serveur 2. Le système comprend au moins un transpondeur 1 disposé sur un objet ou un produit, tel qu'un habit sportif ou une chaussure ou tout autre produit ou instrument de la vie courante. Généralement, le transpondeur 1, qui comprend des moyens de liaison par exemple sans fil pour établir une communication avec le serveur 2, peut être réveillé ou activé par un dispositif de lecture 3. Il peut être établi une communication en champ proche NFC ou une communication UHF par l'intermédiaire notamment du dispositif de lecture 3.

Il est à noter qu'il faut comprendre que la réception d'un signal d'interrogation du transpondeur 1 concerne aussi la sollicitation du transpondeur 1 par le dispositif de lecture 3 ou l'activation du transpondeur 1 par le dispositif de lecture 3.

Le dispositif de lecture 3 peut être une unité mobile de communication comme un téléphone portable ou tablette portable 3. Ce téléphone ou tablette portable 3 peut établir une communication avec un serveur 2 afin de débuter le procédé d'authentification d'un transpondeur 1 pour lui permettre une fois authentifié d'avoir accès par exemple à un site déterminé par l'intermédiaire du serveur 2. Le site déterminé est relatif au produit sur lequel est disposé le transpondeur 1.

En regard également de la figure 2 en liaison avec la figure 1, à l'approche de l'unité de communication mobile 3, telle qu'un téléphone portable 3, du transpondeur 1, ce dernier peut être alimenté en redressant un signal d'interrogation capté du téléphone. Une fois réveillé à la réception du signal d'interrogation NDEF, le transpondeur 1 peut effectuer des opérations de calcul ou cryptage d'un mot de passe unique OTP dans une unité de traitement du transpondeur 1 à l'aide d'un algorithme dédié et d'une clé secrète K. L'algorithme est mémorisé dans une unité mémoire reliée à l'unité de traitement, et peut être un algorithme de cryptage et décryptage symétrique (AES). Le mot de passe unique OTP est calculé sur la base de l'état actuel CNT d'un compteur relié à l'unité de traitement du transpondeur 1, et d'une grandeur physique, qui est de préférence un retard de transmission déterminé Δt dans le transpondeur 1 dès la réception du signal d'interrogation reçu du dispositif de lecture 3. Cependant, la grandeur physique peut être différente d'un retard de transmission, c'est-à-dire une grandeur physique mesurable aussi bien par le transpondeur que par le dispositif de lecture, par exemple une mesure de température ou une mesure de pression, telle que la pression atmosphérique.

Le mot de passe OTP est égal à AES_{K}(CNT | | ID| | Δt| | fix), où K est la clé secrète, CNT est l'état actuel du compteur du transpondeur 1 à la requête de lecture, ID est un numéro d'identification du transpondeur 1 ou du produit sur lequel il est placé, Δt est un retard de transmission déterminé par exemple de manière aléatoire dans le transpondeur 1, et fix est une constante, voire une variable. Bien entendu au moins l'état du compteur CNT et le retard de transmission Δt doivent être cryptés dans le mot de passe unique OTP pour une transmission vers l'unité de communication mobile 3, telle que le téléphone portable, et pour le serveur 2.

Le mot de passe unique OTP est transmis par les moyens de liaison sans fil du transpondeur 1 au serveur 2 par l'intermédiaire du dispositif de lecture 3. Le dispositif de lecture 3 détermine le retard de transmission Δt', du transpondeur 1 à la réception du mot de passe unique OTP du transpondeur 1. Le dispositif de lecture 3 peut déterminer directement ce retard de transmission Δt', sur la base du signal d'interrogation NDEF transmis depuis le dispositif de lecture 3 vers le transpondeur 1. Le dispositif de lecture 3 transmet au serveur 2 dans un signal URL, en plus du mot de passe unique OTP, l'information du retard de transmission Δt', déterminé dans le dispositif de lecture 3.

Dès que le mot de passe unique OTP est reçu dans le serveur 2 avec l'information du retard de transmission Δt', une opération de décryptage AES-¹_{K}(CNT | | ID| | Δt| | fix), est effectuée dans le serveur 2 au moyen de la même clé secrète K et par l'algorithme dédié, qui est de préférence l'algorithme de cryptage et décryptage symétrique (AES). Il est effectué dans le serveur 2 un contrôle du retard de transmission Δt décrypté du mot de passe unique OTP reçu, et du retard de transmission Δt', déterminé dans le dispositif de lecture 3. Si les deux retards de transmission Δt', Δt correspondent dans une marge temporelle déterminée, c'est que le mot de passe unique OTP provient bien du transpondeur 1 à authentifier. De plus, il est effectué un contrôle de l'état du compteur CNT décrypté pour savoir s'il est différent d'un précédent état du compteur CNTₑₙᵣ mémorisé dans le serveur 2. De préférence, l'état du compteur CNT décrypté du mot de passe unique OTP reçu doit être supérieur au précédent état du compteur CNTₑₙᵣ mémorisé. Si au moins ces deux critères sont vérifiés, le transpondeur 1 est authentifié par le serveur 2 pour lui permettre par exemple de l'autoriser à avoir accès à un site déterminé de produits en en relation au produit sur lequel est placé le transpondeur 1. Normalement il est encore vérifié le numéro d'identification ID du transpondeur et la constante ou variable fix, qui sont déchiffrés.

Il est à noter que le retard de transmission Δt déterminé à chaque lecture dans le transpondeur 1 doit être beaucoup plus grand que les temps de réception et d'émission des signaux entre le transpondeur 1, le dispositif de lecture 3 et le serveur 2. Comme la communication avec le serveur 2 n'intervient pas dans le calcul du retard Δt ou Δt', les temps d'émission et réception avec le serveur 2 sont de moindre importance. Une base de temps liée à l'unité de traitement du transpondeur 1 peut être calibrée initialement avant une première utilisation ou première lecture. Il peut être envisagé que le retard de transmission Δt soit au moins 3 fois supérieur à la différence entre les temps d'émission et réception maximal et minimal mesurés par le dispositif de lecture 3.

A la réception et au contrôle dans le serveur 2 du signal URL, il est admis une marge temporelle déterminée de correspondance entre les deux retards de transmission comparés pour authentifier le transpondeur 1. Il est tenu compte notamment des écarts de bases de temps entre chaque unité de communication et des temps de réception et transmission. On peut admettre une erreur pouvant aller jusqu'à 10% entre les deux retards de transmission. Cependant cette erreur est variable en fonction du système de mesure utilisé.

Il est encore à noter que l'état du compteur CNT peut varier d'une première lecture à une seconde lecture avec un incrément d'une unité à chaque lecture ou avec un incrément d'un nombre aléatoire, qui est un nombre entier plus grand ou égal à 1, déterminé à chaque lecture. Initialement le compteur CNT du transpondeur peut être mis à zéro pour permettre un certain nombre de lectures successives sans devoir atteindre une valeur limite du comptage et repasser à zéro.

Il est encore à noter qu'en lieu et place d'une unité de communication mobile, tel qu'un téléphone ou une tablette 3, il peut être envisagé d'utiliser une unité de communication à distance pour une communication par signaux UHF avec le transpondeur 1. Cette unité de communication UHF peut être un portail d'entrée à une installation de ski, une station de péage autoroutier ou divers autres instruments, reliés à un serveur 2 de manière filaire ou de préférence sans fil.

Au lieu d'un cryptage ou décryptage symétrique, il peut être envisagé d'utiliser aussi un cryptage et décryptage de chaque mot de passe unique OTP au moyen d'un algorithme de cryptage et décryptage asymétrique.

A partir de la description qui vient d'être faite, plusieurs variantes du procédé d'authentification sécurisée d'un transpondeur en communication avec un serveur selon l'invention peuvent être conçues par l'homme du métier sans sortir du cadre de l'invention définie par les revendications. Le transpondeur peut être du type passif, voire du type actif avec sa propre source d'énergie, qui peut être une batterie, ou une cellule solaire ou un générateur thermoélectrique.

## Revendications

1. Procédé d'authentification sécurisée d'un transpondeur (1) en communication avec un serveur (2), le transpondeur comprenant une unité de traitement reliée à une unité mémoire, à un compteur et à des moyens de liaison pour établir une communication avec le serveur (2), **caractérisé en ce que** le procédé comprend les étapes de :
- calculer un mot de passe unique (OTP) dans l'unité de traitement du transpondeur (1) à l'aide d'un algorithme dédié, ledit algorithme étant mémorisé, sur la base de l'état actuel du compteur et d'une grandeur physique mesurable, déterminée dans le transpondeur (1) suite à la réception d'un signal d'interrogation reçu d'un dispositif de lecture (3),
- transmettre le mot de passe unique (OTP) au serveur (2) par l'intermédiaire du dispositif de lecture (3), qui détermine la grandeur physique mesurable du transpondeur (1), et pour transmettre au serveur (2) en plus du mot de passe unique (OTP), l'information de la grandeur physique mesurable, déterminée dans le dispositif de lecture (3), ladite grandeur physique mesurable étant un retard de transmission déterminé ou une pression ou une température,
- recevoir le mot de passe unique (OTP) dans le serveur (2) avec l'information de la grandeur physique mesurable du dispositif de lecture (3),
- décrypter par l'algorithme dédié le mot de passe unique (OTP), et
- contrôler si la grandeur physique mesurable décryptée du mot de passe unique (OTP) reçu correspond à la grandeur physique mesurable, déterminée dans le dispositif de lecture (3) et reçue dans l'information de la grandeur physique mesurable, et si l'état du compteur est différent d'un précédent état de compteur reçu de manière à authentifier le transpondeur.

2. Procédé d'authentification sécurisée d'un transpondeur (1) selon la revendication 1, **caractérisé en ce que** la communication entre le transpondeur (1) et le serveur (2) passe par l'intermédiaire du dispositif de lecture (3), qui est une unité de communication mobile (3), en liaison en champ proche avec le transpondeur (1).

3. Procédé d'authentification sécurisée d'un transpondeur (1) selon la revendication 1, **caractérisé en ce que** la communication entre le transpondeur (1) et le serveur (2) passe par l'intermédiaire du dispositif de lecture (3), qui est une unité de communication mobile (3), en liaison UHF avec le transpondeur (1).

4. Procédé d'authentification sécurisée d'un transpondeur (1) selon la revendication 1, **caractérisé en ce que** la grandeur physique déterminée dans le transpondeur (1) est un retard de transmission déterminé (Δt), **en ce que** le dispositif de lecture (3) détermine le retard de transmission (Δt') du transpondeur à la réception des données du transpondeur (1), et pour transmettre au serveur (2) en plus du mot de passe unique (OTP), l'information du retard de transmission (Δt') déterminé dans le dispositif de lecture (3), et **en ce qu'**après décryptage du mot de passe unique (OTP), il est contrôlé dans le serveur (2) si le retard de transmission (Δt) décrypté du mot de passe unique (OTP) reçu correspond au retard de transmission (Δt') déterminé dans le dispositif de lecture (3) et reçu dans l'information du retard de transmission (Δt') dans une marge temporelle déterminée, pour authentifier le transpondeur (1).

5. Procédé d'authentification sécurisée d'un transpondeur (1) selon la revendication 1, **caractérisé en ce que** la grandeur physique déterminée dans le transpondeur (1) est une mesure de température, **en ce que** le dispositif de lecture (3) détermine la température au cours du procédé d'authentification, et pour transmettre au serveur (2) en plus du mot de passe unique (OTP), l'information de la mesure de température déterminée dans le dispositif de lecture (3), et **en ce qu'**après décryptage du mot de passe unique (OTP), il est contrôlé dans le serveur (2) si la mesure de température décryptée du mot de passe unique (OTP) reçu correspond à la mesure de température déterminée dans le dispositif de lecture (3) et reçue dans l'information de la mesure de température, pour authentifier le transpondeur (1).

6. Procédé d'authentification sécurisée d'un transpondeur (1) selon la revendication 1, **caractérisé en ce que** la grandeur physique déterminée dans le transpondeur (1) est une mesure de pression, **en ce que** le dispositif de lecture (3) détermine la pression, telle que la pression atmosphérique, au cours du procédé d'authentification, et pour transmettre au serveur (2) en plus du mot de passe unique (OTP), l'information de la mesure de pression déterminée dans le dispositif de lecture (3), et **en ce qu'**après décryptage du mot de passe unique (OTP), il est contrôlé dans le serveur (2) si la mesure de pression décryptée du mot de passe unique (OTP) reçu correspond à la mesure de pression déterminée dans le dispositif de lecture (3) et reçue dans l'information de la mesure de pression, pour authentifier le transpondeur (1).

7. Procédé d'authentification sécurisée d'un transpondeur (1) selon la revendication 1, **caractérisé en ce que** le cryptage et décryptage de chaque mot de passe unique (OTP) est obtenu au moyen d'un algorithme de cryptage et décryptage symétrique (AES) et d'une même clé secrète (K) mémorisée dans le transpondeur (1) et le serveur (2).

8. Procédé d'authentification sécurisée d'un transpondeur (1) selon la revendication 1, **caractérisé en ce que** le cryptage et décryptage de chaque mot de passe unique (OTP) est obtenu au moyen d'un algorithme de cryptage et décryptage asymétrique.

9. Procédé d'authentification sécurisée d'un transpondeur (1) selon la revendication 4, **caractérisé en ce qu'**à chaque lecture du transpondeur (1), un nouveau retard de transmission (Δt) est déterminé de manière aléatoire dans le transpondeur (1).

10. Procédé d'authentification sécurisée d'un transpondeur (1) selon la revendication 4, **caractérisé en ce que** chaque retard de transmission (Δt) peut être au moins 3 fois supérieur à la différence entre les temps maximal et minimal mesurés par le dispositif de lecture (3).

11. Procédé d'authentification sécurisée d'un transpondeur (1) selon la revendication 1, **caractérisé en ce qu'**à chaque lecture du transpondeur (1), une nouvelle grandeur est déterminée dans le transpondeur (1).

12. Procédé d'authentification sécurisée d'un transpondeur (1) selon la revendication 1, **caractérisé en ce qu'**à chaque nouvelle lecture du transpondeur (1), l'état du compteur est incrémenté ou décrémenté d'un nombre aléatoire, qui est un nombre entier plus grand ou égal à 1, et **en ce que** le serveur (2) détermine si l'état du compteur décrypté du mot de passe unique (OTP) reçu est plus grand ou moins grand qu'un précédent état du compteur mémorisé dans le serveur pour authentifier le transpondeur (1).

13. Transpondeur (1) convenant à la mise en oeuvre du procédé d'authentification sécurisée selon l'une des revendications précédentes, **caractérisé en ce qu'**il comprend une unité de traitement susceptible d'implémenter un protocole d'authentification à mot de passe unique (OTP), l'unité de traitement étant reliée à une unité mémoire comprenant un algorithme de cryptage dédié, un compteur et des moyens de liaison pour établir une communication avec un serveur (2), et **en ce que** le transpondeur (1) est adapté pour déterminer ou mesurer une grandeur physique, qui est cryptée dans le mot de passe unique (OTP) pour une transmission à destination d'un serveur (2) par l'intermédiaire d'un dispositif de lecture (3), qui est capable de déterminer la grandeur physique mesurable, telle qu'un retard de transmission déterminé ou une pression ou une température.

## Patentansprüche

1. Verfahren zur gesicherten Authentifizierung eines Transponders (1), der mit einem Server (2) kommuniziert, wobei der Transponder eine Verarbeitungseinheit umfasst, die angeschlossen ist an eine Speichereinheit, einen Zähler und Verbindungsmittel, zum Herstellen einer Kommunikation mit dem Server (2), **dadurch gekennzeichnet, dass** das Verfahren die Schritte umfasst:
- Berechnen eines Einmalpassworts (OTP) in der Verarbeitungseinheit des Transponders (1) unter Verwendung eines dedizierten Algorithmus, wobei der Algorithmus gespeichert wird auf der Grundlage des aktuellen Zählerstands und einer messbaren physikalischen Größe, die im Transponder (1) nach dem Empfang eines Abfragesignals bestimmt wird, das von einer Lesevorrichtung (3) empfangenen wird,
- Übertragen des Einmalpassworts (OTP) an den Server (2) mittels der Lesevorrichtung (3), die die messbare physikalische Größe des Transponders (1) bestimmt, und, zusätzlich zum Einmalpasswort (OTP), zur Übertragung an den Server (2) der Information der messbaren physikalischen Größe, die in der Lesevorrichtung (3) bestimmt wird, wobei die messbare physikalische Größe eine bestimmte Übertragungsverzögerung oder ein Druck oder eine Temperatur ist,
- Empfangen des Einmalpassworts (OTP) im Server (2) mit der Information der messbaren physikalische Größe der Lesevorrichtung (3),
- Entschlüsseln des Einmalpassworts (OTP) durch den dedizierten Algorithmus,
und
- Prüfen, ob die entschlüsselte messbare physikalische Größe des empfangenen Einmalpassworts (OTP) der messbaren physikalischen Größe entspricht, die in der Lesevorrichtung (3) bestimmt und in der Information der messbaren physikalischen Größe empfangen wird, und ob sich der Zählerstand von einem empfangenen vorhergehenden Zählerstand unterscheidet, auf eine Weise, dass der Transponder authentifiziert werden kann.

2. Verfahren zur gesicherten Authentifizierung eines Transponders (1) nach Anspruch 1, **dadurch gekennzeichnet, dass** die Kommunikation zwischen dem Transponder (1) und dem Server (2) mittels der Lesevorrichtung (3) erfolgt, die eine mobile Kommunikationseinheit (3) ist, in Nahfeldverbindung mit dem Transponder (1).1004

3. Verfahren zur gesicherten Authentifizierung eines Transponders (1) nach Anspruch 1, **dadurch gekennzeichnet, dass** die Kommunikation zwischen dem Transponder (1) und dem Server (2) mittels der Lesevorrichtung (3) erfolgt, die eine mobile Kommunikationseinheit (3) ist, in UHF-Verbindung mit dem Transponder (1).

4. Verfahren zur gesicherten Authentifizierung eines Transponders (1) nach Anspruch 1, **dadurch gekennzeichnet, dass** die physikalische Größe, die im Transponder (1) bestimmt wird, eine bestimmte Übertragungsverzögerung (Δt) ist, dass die Lesevorrichtung (3) die Übertragungsverzögerung (Δt') des Transponders beim Empfang der Daten vom Transponder (1) bestimmt, und, zusätzlich zum Einmalpasswort (OTP), zur Übertragung an den Server (2) der Information der Übertragungsverzögerung (Δt'), die in der Lesevorrichtung (3) bestimmt wird, und dass, nach der Entschlüsselung des Einmalpassworts (OTP), im Server (2) geprüft wird, ob die entschlüsselte Übertragungsverzögerung (Δt) des empfangenen Einmalpassworts (OTP) der Übertragungsverzögerung (Δt') entspricht, die in der Lesevorrichtung (3) bestimmt und in der Information der Übertragungsverzögerung (Δt') innerhalb eines bestimmten Zeitbereichs empfangen wird, um den Transponder (1) zu authentifizieren.

5. Verfahren zur gesicherten Authentifizierung eines Transponders (1) nach Anspruch 1, **dadurch gekennzeichnet, dass** die physikalische Größe, die im Transponder (1) bestimmt wird, eine Temperaturmessung ist, dass die Lesevorrichtung (3) die Temperatur während dem Authentifizierungsverfahren bestimmt, und, zusätzlich zum Einmalpasswort (OTP), der Übertragung an den Server (2) der Information der Temperaturmessung, die in der Lesevorrichtung (3) bestimmt wird, und dass, nach der Entschlüsselung des Einmalpassworts (OTP), im Server (2) geprüft wird, ob die entschlüsselte Temperaturmessung des empfangenen Einmalpassworts (OTP) der Temperaturmessung entspricht, die in der Lesevorrichtung (3) bestimmt und in der Information der Temperaturmessung empfangen wird, um den Transponder (1) zu authentifizieren.

6. Verfahren zur gesicherten Authentifizierung eines Transponders (1) nach Anspruch 1, **dadurch gekennzeichnet, dass** die physikalische Größe, die im Transponder (1) bestimmt wird, eine Druckmessung ist, dass die Lesevorrichtung (3) den Druck, wie den atmosphärischen Druck, während des Authentifizierungsverfahrens bestimmt, und, zusätzlich zum Einmalpasswort (OTP), der Übertragung an den Server (2) der Information der Druckmessung, die in der Lesevorrichtung (3) bestimmt wird, und dass, nach der Entschlüsselung des Einmalpassworts (OTP), im Server (2) geprüft wird, ob die entschlüsselte Druckmessung des empfangenen Einmalpassworts (OTP) der Druckmessung entspricht, die in der Lesevorrichtung (3) bestimmt und in der Information der Druckmessung empfangen wird, um den Transponder (1) zu authentifizieren.

7. Verfahren zur gesicherten Authentifizierung eines Transponders (1) nach Anspruch 1, **dadurch gekennzeichnet, dass** die Verschlüsselung und Entschlüsselung jedes Einmalpassworts (OTP) mithilfe eines symmetrischen Verschlüsselungs- und Entschlüsselungsalgorithmus (AES) erhalten wird, und auch eines Geheimschlüssels (K), der im Transponder (1) und im Server (2) gespeichert ist.

8. Verfahren zur gesicherten Authentifizierung eines Transponders (1) nach Anspruch 1, **dadurch gekennzeichnet, dass** die Verschlüsselung und Entschlüsselung jedes Einmalpassworts (OTP) mithilfe eines asymmetrischen Verschlüsselungs- und Entschlüsselungsalgorithmus erhalten wird.

9. Verfahren zur gesicherten Authentifizierung eines Transponders (1) nach Anspruch 4, **dadurch gekennzeichnet, dass** bei jeder Lesung des Transponders (1) eine neue Übertragungsverzögerung (Δt) auf zufällige Weise im Transponder (1) bestimmt wird.

10. Verfahren zur gesicherten Authentifizierung eines Transponders (1) nach Anspruch 4, **dadurch gekennzeichnet, dass** jede Übertragungsverzögerung (Δt) mindestens 3-mal größer sein kann als die Differenz zwischen den maximalen und minimalen Zeiten, die von der Lesevorrichtung (3) gemessen werden.

11. Verfahren zur gesicherten Authentifizierung eines Transponders (1) nach Anspruch 1, **dadurch gekennzeichnet, dass** bei jeder Lesung des Transponders (1) eine neue Größe im Transponder (1) bestimmt wird.

12. Verfahren zur gesicherten Authentifizierung eines Transponders (1) nach Anspruch 1, **dadurch gekennzeichnet, dass** bei jeder erneuten Lesung des Transponders (1) der Zählerstand um eine Zufallszahl, die eine ganze Zahl größer oder gleich 1 ist, inkrementiert oder dekrementiert wird und dass der Server (2) bestimmt, ob der entschlüsselte Zählerstand des empfangenen Einmalpassworts (OTP) größer oder kleiner ist als ein vorhergehender Zählerstand, der im Server gespeichert ist, um den Transponder (1) zu authentifizieren.

13. Transponder (1), der zur Durchführung des gesicherten Authentifizierungsverfahrens nach einem der vorhergehenden Ansprüche geeignet ist, **dadurch gekennzeichnet, dass** er eine Verarbeitungseinheit umfasst, die imstande ist, ein Authentifizierungsprotokoll mit Einmalpasswort (OTP) zu implementieren, wobei die Verarbeitungseinheit an eine Speichereinheit angeschlossen ist, die einen dedizierten Verschlüsselungsalgorithmus umfasst, einen Zähler und Verbindungsmittel zum Herstellen einer Kommunikation mit einem Server (2), und dass der Transponder (1) angepasst ist, um eine physikalische Größe zu bestimmen oder zu messen, die im Einmalpasswort (OTP) verschlüsselt ist, für eine Übertragung an einen Server (2) mittels einer Lesevorrichtung (3), die in der Lage ist, die messbare physikalische Größe, wie eine bestimmte Übertragungsverzögerung oder einen Druck oder eine Temperatur zu bestimmen.

## Claims

1. Method of securely authenticating a transponder (1) in communication with a server (2), the transponder comprising a processing unit connected to a memory unit, to a counter and to connection means so as to establish a communication with the server (2), **characterised in that** the method comprises the steps of:
- calculating a one-time password (OTP) in the processing unit of the transponder (1) with the help of a dedicated algorithm, said algorithm being stored, on the basis of the current state of the counter and on the basis of a measurable physical quantity determined in the transponder (1) following receipt of an interrogation signal received from a reading device (3),
- transmitting the one-time password (OTP) to the server (2) by means of the reading device (3), which determines the measurable physical quantity of the transponder (1), and transmitting to the server (2), in addition to the one-time password (OTP), the information about the measurable physical quantity determined in the reading device (3), said measurable physical quantity being a transmission delay or a pressure or a temperature,
- receiving the one-time password (OTP) in the server (2) with the information about the measurable physical quantity of the reading device (3),
- decrypting by the dedicated algorithm the one-time password (OTP), and
- checking if the decrypted measurable physical quantity of the received one-time password (OTP) corresponds to the measurable physical quantity determined in the reading device (3) and received in the information about the measurable physical quantity, and if the state of the counter is different from a received previous state of the counter so as to authenticate the transponder.

2. Method of securely authenticating a transponder (1) according to claim 1, **characterised in that** the communication between the transponder (1) and the server (2) passes by means of the reading device (3), which is a mobile communication unit (3), in near-field connection with the transponder (1).

3. Method of securely authenticating a transponder (1) according to claim 1, **characterised in that** the communication between the transponder (1) and the server (2) passes by means of the reading device (3), which is a mobile communication unit (3), in UHF connection with the transponder (1).

4. Method of securely authenticating a transponder (1) according to claim 1, **characterised in that** the physical quantity determined in the transponder (1) is a determined transmission delay (Δt), **in that** the reading device (3) determines the transmission delay (Δt') of the transponder upon receipt of data from the transponder (1), and so as to transmit to the server (2), in addition to the one-time password (OTP), the information about the transmission delay (Δt') determined in the reading device (3), and **in that**, after decrypting of the one-time password (OTP), it is checked in the server (2) if the decrypted transmission delay (Δt) of the received one-time password (OTP) corresponds to the transmission delay (Δt') determined in the reading device (3) and received in the information about the transmission delay (Δt') within a determined temporal margin, so as to authenticate the transponder (1).

5. Method of securely authenticating a transponder (1) according to claim 1, **characterised in that** the physical quantity determined in the transponder (1) is a temperature measurement, **in that** the reading device (3) determines the temperature in the course of the authentication method, and so as to transmit to the server (2), in addition to the one-time password (OTP), the information about the temperature measurement determined in the reading device (3), and **in that**, after decrypting the one-time password (OTP), it is checked in the server (2) if the decrypted temperature measurement of the received one-time password (OTP) corresponds to the temperature measurement determined in the reading device (3) and received in the information about the temperature measurement, so as to authenticate the transponder (1).

6. Method of securely authenticating a transponder (1) according to claim 1, **characterised in that** the physical quantity determined in the transponder (1) is a pressure measurement, **in that** the reading device (3) determines the pressure, such as the atmospheric pressure, in the course of the authentication method, and so as to transmit to the server (2), in addition to the one-time password (OTP), the information about the pressure measurement determined in the reading device (3), and **in that**, after decrypting the one-time password (OTP), it is checked in the server (2) if the decrypted pressure measurement of the received one-time password (OTP) corresponds to the pressure measurement determined in the reading device (3) and received in the information about the pressure measurement, so as to authenticate the transponder (1).

7. Method of securely authenticating a transponder (1) according to claim 1, **characterised in that** the encryption and decryption of each one-time password (OTP) is obtained by means of a symmetric encryption and decryption algorithm (AES) and by means of one and the same secret key (K) stored in the transponder (1) and the server (2).

8. Method of securely authenticating a transponder (1) according to claim 1, **characterised in that** the encryption and decryption of each one-time password (OTP) is obtained by means of an asymmetric encryption and decryption algorithm.

9. Method of securely authenticating a transponder (1) according to claim 4, **characterised in that**, at each reading of the transponder (1), a new transmission delay (Δt) is determined randomly in the transponder (1).

10. Method of securely authenticating a transponder (1) according to claim 4, **characterised in that** each transmission delay (Δt) can be at least 3 times greater than the difference between the maximum and minimum times measured by the reading device (3).

11. Method of securely authenticating a transponder (1) according to claim 1, **characterised in that**, at each reading of the transponder (1), a new quantity is determined in the transponder (1).

12. Method of securely authenticating a transponder (1) according to claim 1, **characterised in that**, at each new reading of the transponder (1), the state of the counter is incremented or decremented by a random number, which is a whole number greater than or equal to 1, and **in that** the server (2) determines if the state of the decrypted counter of the received one-time password (OTP) is greater than or less than a previous state of the counter stored in the server so as to authenticate the transponder (1).

13. Transponder (1) suitable for implementing the secure authentication method according to claim 1, **characterised in that** it comprises a processing unit which is able to implement a one-time password (OTP), authentication protocol, the processing unit being connected to a memory unit comprising a dedicated encryption algorithm, a counter and connection means so as to establish a communication with a server (2), and **in that** the transponder (1) is adapted so as to determine or measure a physical quantity, which is encrypted in the one-time password (OTP) for a transmission to a server (2) by means of a reading device (3), which is capable of determining the measurable physical quantity, such as a determined transmission delay or a pressure or a temperature.
